# EUROPÄISCHE PATENTANMELDUNG

(11) **EP 4 656 870 A1**
(43) Veröffentlichungstag der Anmeldung: **03.12.2025**
(21) Anmeldenummer: 24178174.9
(22) Anmeldetag: 27.05.2024
(51) Int. Cl.: F03D 1/06, F03D 80/40

(54) **WINDENERGIEANLAGEN-ROTORBLATT**

(71) Anmelder: Wobben Properties GmbH, 26607 Aurich (DE)
(72) Erfinder: Krebs, Sven, 26789 Leer (DE); Raap-Mannott, Markus, 26607 Aurich (DE); Bajen, Jörg, 26556 Utarp (DE)
(74) Vertreter: Eisenführ Speiser

(57) **Zusammenfassung**

Es wird ein Windenergieanlagen-Rotorblatt (200) mit einer Rotorblattschale (210, 220), welche ein Innenvolumen (203) umgibt, und mindestens einem Strömungswiderstand (300) in dem Innenvolumen (203) vorgesehen. Der Strömungswiderstand (300) führt zu einer Verengung des für die Luftströmung benötigten Volumens, was zu einer Erhöhung der Strömungsgeschwindigkeit führt, was zu einer verbesserten Wärmeübertragung und damit einer besseren Erwärmung der Rotorblätter führt. Ein Rotorblattheizsystem (500) ist in oder an der Wurzel (201) des Rotorblattes (200) vorgesehen. Das Rotorblattheizsystem (500) erzeugt warme Luft, welche in das Innenvolumen (203) des Rotorblattes (200) befördert wird. Der Strömungswiderstand (300) kann als ein Tunnel (350) aus einer Mehrzahl von gebogenen kunststoffverstärkten Faserplatten (351 - 356) hergestellt werden. Die Enden der gebogenen Platten können mittels Winkeln gehalten werden. Das Volumen, dass durch den Tunnel (350) überdeckt wird, kann zumindest teilweise ausgefüllt werden.

## Beschreibung

Die vorliegende Erfindung betrifft ein Windenergieanlagen-Rotorblatt.

Da die Rotorblätter einer Windenergieanlage ungeschützt allen Witterungsbedingungen ausgesetzt sind, kann es bei bestimmten Temperaturen zu einer Vereisung der Rotorblätter kommen. Um dies zu verhindern, kann eine Rotorblattheizung verwendet werden. Hierbei kann entweder eine Heizung außen am Rotorblatt vorgesehen werden oder erwärmte Luft kann innerhalb des Rotorblattes vorgesehen sein.

Zur Vermeidung der Vereisung der Rotorblätter wird oftmals eine Rotorblattheizung verwendet. Hierbei wird typischerweise erwärmte Luft im Bereich der Rotorblattwurzel in das Innere des Rotorblattes eingeleitet. Die erwärmte Luft erwärmt wiederum die Rotorblattschale, beispielsweise im Bereich der Rotorblattvorderkante, so dass eine Enteisung des Rotorblattes erreicht werden kann.

WO 2018/211055 zeigt ein Rotorblatt einer Windenergieanlage mit einem Rotorblatt, welches einen Steg und eine Umlenkeinheit an der Rotorblattspitze zum Umlenken von erwärmter Luft aufweist.

EP 4 191 053 A1 zeigt ein Rotorblatt einer Windenergieanlage mit einer Rotorblattheizung und einer Querschnittsverengung des Innenvolumens des Rotorblattes zur Steigerung der Strömungsgeschwindigkeit von erwärmter Luft.

Daher ist eine Aufgabe der vorliegenden Erfindung, ein Windenergieanlagen-Rotorblatt mit einer verbesserten Rotorblattheizung vorzusehen.

Diese Aufgabe wird durch ein Windenergieanlagen-Rotorblatt nach Anspruch 1 gelöst.

Somit wird ein Windenergieanlagen-Rotorblatt mit einer Rotorblattschale, welche ein Innenvolumen umgibt, und mindestens einem Strömungswiderstand in dem Innenvolumen vorgesehen. Der Strömungswiderstand führt zu einer Verengung des für die Luftströmung benötigten Volumens, was zu einer Erhöhung der Strömungsgeschwindigkeit führt, was zu einer verbesserten Wärmeübertragung und damit einer besseren Erwärmung der Rotorblätter führt. Ein Rotorblattheizsystem ist in oder an der Wurzel des Rotorblattes vorgesehen. Das Rotorblattheizsystem erzeugt warme Luft, welche in das Innenvolumen des Rotorblattes befördert wird. Der Strömungswiderstand kann als ein Tunnel aus einer Mehrzahl von gebogenen kunststoffverstärkten Faserplatten hergestellt werden. Die Enden der gebogenen Platten können mittels Winkeln gehalten werden. Das Volumen, dass durch den Tunnel überdeckt wird, kann zumindest teilweise ausgefüllt werden.

Gemäß einem Aspekt der vorliegenden Erfindung weist das Rotorblatt mindestens einen Steg entlang einer Längsrichtung des Rotorblattes auf. Die mindestens eine Querschnittsverengung ist an dem mindestens einen Steg angeordnet bzw. mit dem Steg befestigt.

Gemäß einem weiteren Aspekt der vorliegenden Erfindung weist das Rotorblatt mindestens einen ersten und zweiten Steg entlang einer Längsrichtung des Rotorblattes auf. Ferner ist ein erster Luftkanal zwischen einer Vorderkante des Rotorblattes und einem ersten Steg vorgesehen, wobei mindestens ein erster Strömungswiderstandsabschnitt in dem ersten Luftkanal vorgesehen ist.

Gemäß einem weiteren Aspekt der vorliegenden Erfindung weist das Rotorblatt einen zweiten Luftkanal zwischen einem Steg und einer Rotorblatthinterkante auf. Ein zweiter Strömungswiderstandsabschnitt ist zumindest teilweise in dem zweiten Luftkanal entlang der Längsrichtung des Rotorblattes vorgesehen.

Gemäß einem weiteren Aspekt der vorliegenden Erfindung weist das Rotorblatt mindestens einen dritten Strömungswiderstandsabschnitt in einem dritten Luftkanal zwischen dem ersten und zweiten Steg auf.

Die Erfindung betrifft ebenfalls eine Windenergieanlage mit mindestens einem oben beschrieben Windenergieanlagen-Rotorblatt.

Somit wird ein Windenergieanlagen-Rotorblatt mit einer (zweiteiligen) Blattschale vorgesehen, welche ein Innenvolumen umgibt. Das Rotorblatt weist ferner eine Rotorblattwurzel und eine Rotorblattspitze auf. Zwischen den beiden Blattschalen kann entlang einer Längsrichtung des Rotorblattes zumindest abschnittsweise mindestens ein Steg vorgesehen sein, so dass das Innenvolumen des Rotorblattes in mindestens zwei Abschnitte aufgeteilt wird. Das Rotorblatt weist ferner eine Rotorblattheizung auf, welche beispielsweise im Bereich der Rotorblattwurzel vorgesehen ist und erwärmte Luft in das Innenvolumen des Rotorblattes befördert. Zur Verbesserung der Effektivität der Blattheizung ist im Innenvolumen mindestens ein Strömungswiderstand z. B. in Form einer Querschnittsverengung vorgesehen, so dass das freibleibende Luftvolumen im Innenvolumen reduziert wird. Ferner wird damit auch der für die Luftströmung freie Querschnitt reduziert. Die Reduzierung des freien Querschnitts bewirkt eine Erhöhung der Strömungsgeschwindigkeit, da die Rotorblattheizung einen im Wesentlichen konstanten Luftvolumenstrom bereitstellt. Mit der erhöhten Strömungsgeschwindigkeit kommt es zu einer verbesserten Wärmeübertragung auf die Rotorblattschalen, so dass eine verbesserte Rotorblattheizung durch Vorsehen der Querschnittsverengungen erreicht werden kann.

Gemäß der Erfindung kommt es somit zu einer Reduzierung der freien Querschnittsfläche, durch welche die erwärmte Luft befördert werden kann.

Gemäß einem Aspekt der vorliegenden Erfindung ist ein Steg zwischen den zwei Blattschalen (Druckseite, Saugseite) vorgesehen, so dass im Bereich der Rotorblattvorderkante ein Luftkanal entsteht, durch welchen die von der Rotorblattheizung erwärmte Luft entlangströmen kann. Mindestens ein erster Strömungswiderstandsabschnitt wird im Bereich des ersten Kanals zumindest teilweise entlang einer Längsachse des Rotorblattes vorgesehen.

Gemäß einem weiteren Aspekt der vorliegenden Erfindung ist ein zweiter Steg zwischen den beiden Rotorblattschalen vorgesehen, so dass ein zweiter Kanal im Bereich der Rotorblatthinterkante entsteht. Ein optional zweiter Strömungswiderstandsabschnitt kann in diesem zweiten Kanal vorgesehen sein, so dass der für die Luftströmung freie Querschnitt des zweiten Kanals reduziert wird.

Gemäß einem Aspekt der vorliegenden Erfindung kann in dem ersten Kanal eine erste Querschnittsverengung im Bereich einer Rotorblattlänge von 20 bis 30 m vorgesehen sein.

Gemäß einem weiteren Aspekt der vorliegenden Erfindung können im ersten Kanal entlang einer Längsachse des Rotorblattes drei erste Strömungswiderstandsabschnitte vorgesehen sein, wobei ein erster Strömungswiderstandsabschnitt bei einer Rotorblattlänge zwischen 10 und 15 m, ein zweiter Strömungswiderstandsabschnitt im Bereich einer Rotorblattlänge von 20 bis 25m und/oder ein dritter Strömungswiderstandsabschnitt im Bereich einer Rotorblattlänge von 30 bis 35 m vorgesehen sein kann.

Gemäß der Erfindung wird durch Reduzierung der freien Querschnittsfläche in einem Lüftungskanal die Strömungsgeschwindigkeit (die sich aus dem Volumenstrom und dem Querschnitt ergibt) erhöht. Mit der Erhöhung der Strömungsgeschwindigkeit steigt auch der Wärmeübergangskoeffizient α.

Gemäß der Erfindung erfolgt eine Änderung der Blattinnenströmung zur Verbesserung einer Wärmeübertragung der erhitzten Luft von der Blattheizung an die Rotorblattschale.

Die Querschnittsverengungen stellen passive Möglichkeiten der Erhöhung der Strömungsgeschwindigkeit dar.

Gemäß einem Aspekt der Erfindung können die Querschnittsverengungen nachträglich eingebaut werden.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2A und 2B: zeigen einen schematischen Querschnitt und einen schematischen Längsschnitt eines Rotorblattes gemäß dem Stand der Technik,
- Fig. 3A: zeigt einen schematischen Querschnitt eines Rotorblattes gemäß einem Aspekt der Erfindung,
- Fig. 3B: zeigt einen schematischen Längsschnitt eines Rotorblattes gemäß Fig. 3A,
- Fig. 4A: zeigt einen schematischen Querschnitt eines ersten Abschnitts eines Rotorblattes,
- Fig. 4B: zeigt einen schematischen Querschnitt und einen Längsschnitt eines Abschnitts des Rotorblattes,
- Fig. 4C: zeigt einen schematischen Querschnitt eines Abschnitts eines Rotorblattes und einen Längsschnitt eines Rotorblattes,
- Fig. 5A: zeigt eine schematische Draufsicht auf einen Strömungswiderstand,
- Fig. 5B: zeigt eine Seitenansicht eines Strömungswiderstandes, und
- Fig. 6A bis 6E: zeigen verschiedene Ansichten eines Strömungswiderstandes.

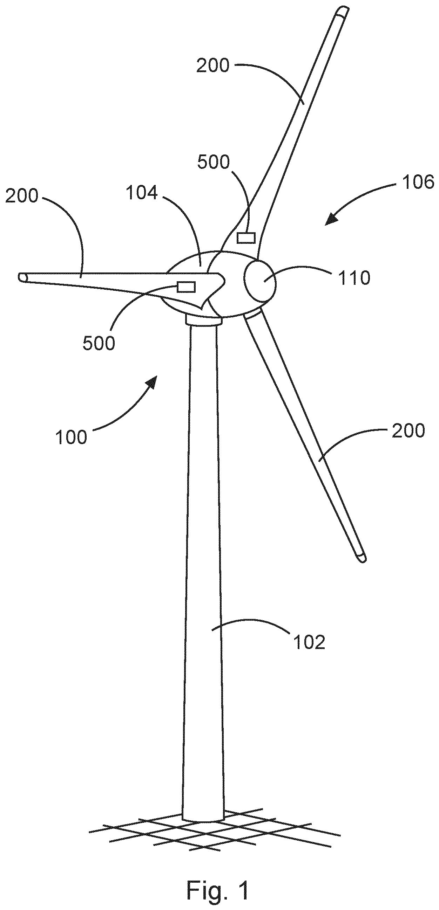

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchmotoren an den Rotorblattwurzeln der jeweiligen Rotorblätter 200 verändert werden.

Zur Rotorblattenteisung kann eine Rotorblattheizung 500 im Bereich einer Rotorblattwurzel vorgesehen sein. Alternativ dazu kann die Rotorblattheizung 500 im Bereich einer Rotornabe oder an einem Rotorblattanschluss vorgesehen sein. Die Rotorblattheizung 500 erzeugt warme Luft und leitet sie dann in das Innere des Rotorblattes zur Enteisung des Rotorblattes oder zur Vorbeugung einer Vereisung.

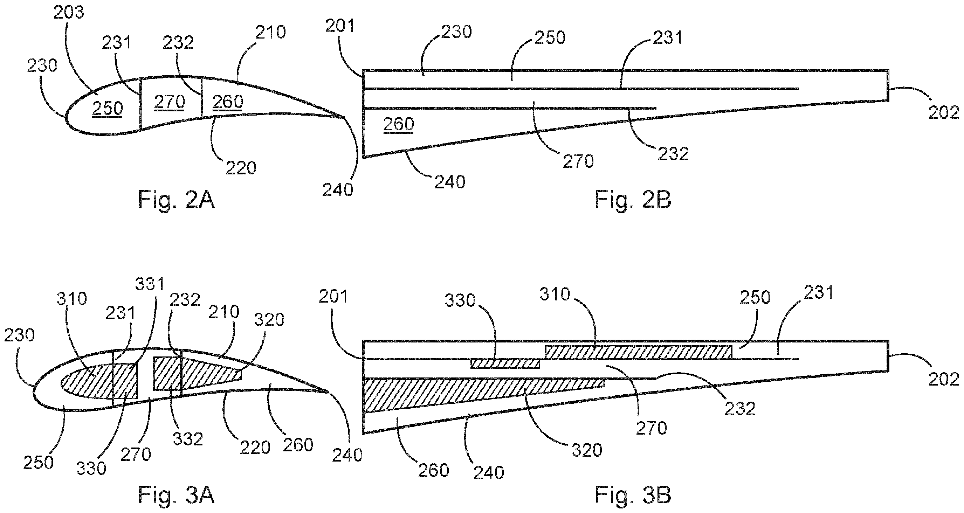

Fig. 2A zeigt einen Querschnitt eines Rotorblattes und Fig. 2B zeigt einen Längsschnitt eines Rotorblattes. Das Rotorblatt 200 weist zwei Blattschalen 210, 220 auf, welche ein Innenvolumen 203 umgeben. Das Rotorblatt 200 weist ferner eine Rotorblattvorderkante 230 und eine Rotorblatthinterkante 240 auf. Zwischen den Blattschalen 210, 220 können

Stege 231, 232 vorgesehen sein, so dass das Innenvolumen 203 in verschiedene Abschnitte oder Kanäle 250, 260 und 270 (erster Kanal 250 zwischen Vorderkante 230 und erstem Steg 231, zweiter Kanal 260 zwischen Hinterkante 240 und zweitem Steg 232 und dritter Kanal 270 zwischen erstem und zweitem Steg 231, 232) aufgeteilt werden kann. Der Steg 231 kann beispielsweise länger sein als der Steg 232.

Fig. 3A und 3B zeigen einen entsprechenden Querschnitt eines Rotorblattes sowie einen Längsschnitt des Rotorblattes gemäß einem Ausführungsbeispiel der Erfindung. Während in dem Rotorblatt gemäß Fig. 2A und 2B die Kanäle 250, 260 und 270 unverändert dargestellt sind, sind in den Kanälen gemäß Fig. 3A und 3B Strömungswiderstände 300 mit Strömungswiderstandsabschnitten im ersten, zweiten und dritten Kanal 250, 260, 270 vorgesehen. In Fig. 3B ist die Verteilung der Strömungswiderstände 300 mit Strömungswiderstandsabschnitten 310, 320, 330 entlang einer Längsachse des Rotorblattes dargestellt.

Sowohl die Querschnitte der Strömungswiderstände 300 mit Strömungswiderstandsabschnitten als auch ihre Verteilung entlang der Längsachse des Rotorblattes können gemäß der Erfindung von den in Fig. 3A und 3B dargestellten Querschnitten und Längsverteilungen abweichen.

Durch die Strömungswiderstände 300 mit Strömungswiderstandsabschnitten kommt es zu einer höheren Strömungsgeschwindigkeit der durch die Rotorblattheizung 500 in das Innere (in die Kanäle 250, 260, 270) des Rotorblattes strömenden Luft.

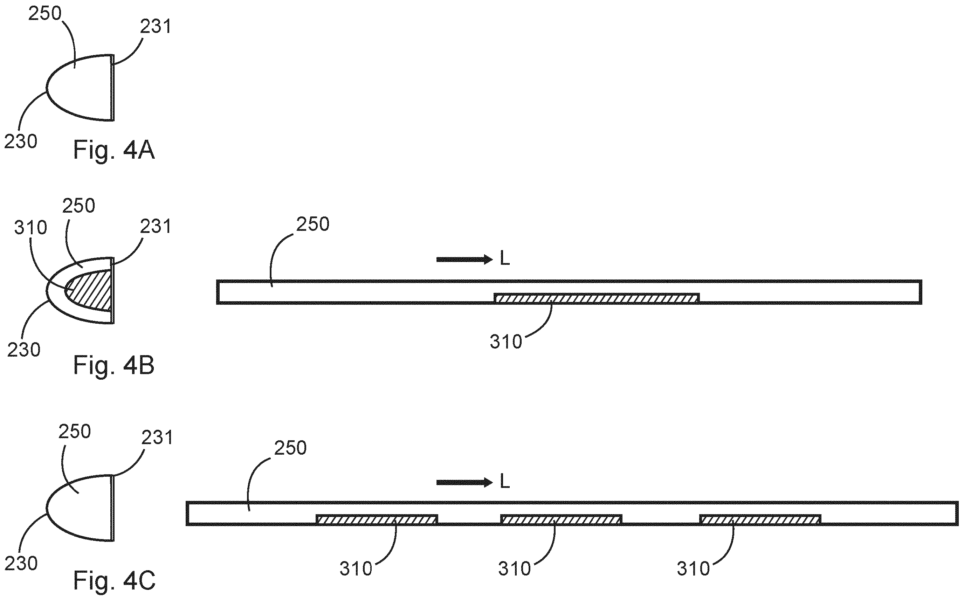

Fig. 4A zeigt einen schematischen Querschnitt eines ersten Kanals von Fig. 3A. In dem ersten Kanal 250 sind keine Strömungswiderstände 300 mit Strömungswiderstandsabschnitten vorgesehen.

In Fig. 4B sind Strömungswiderstände in dem ersten Kanal 250 gemäß einem Ausführungsbeispiel der Erfindung vorgesehen. Die Verteilung der Strömungswiderstände ist ebenfalls in Fig. 4B in einem schematischen Längsschnitt dargestellt. Hierbei können die Strömungswiderstände 310 beispielsweise zwischen einer Rotorblattlänge oder einem Radius von 20 bis 30 m vorgesehen sein.

In Fig. 4C ist ein schematischer Querschnitt eines ersten Kanals sowie ein schematischer Längsschnitt des ersten Kanals dargestellt. Die Strömungswiderstände 310 können gemäß Fig. 4C an drei Stellen entlang der Rotorblattlängsachse, nämlich bei einem Rotorblattradius von beispielsweise 10 bis 15 m, 20 bis 25 m und 30 bis 35 m vorgesehen sein.

In Fig. 4A ist somit der Fall ohne Strömungswiderstände dargestellt, in Fig. 4B ist der Fall mit einem Strömungswiderstand und in Fig. 4C ist ein Ausführungsbeispiel mit drei Strömungswiderständen dargestellt.

Durch die Erhöhung der Strömungsgeschwindigkeit durch das Vorsehen des Strömungswiderstands kommt es zu einer Erhöhung des Wärmeübergangskoeffizienten α.

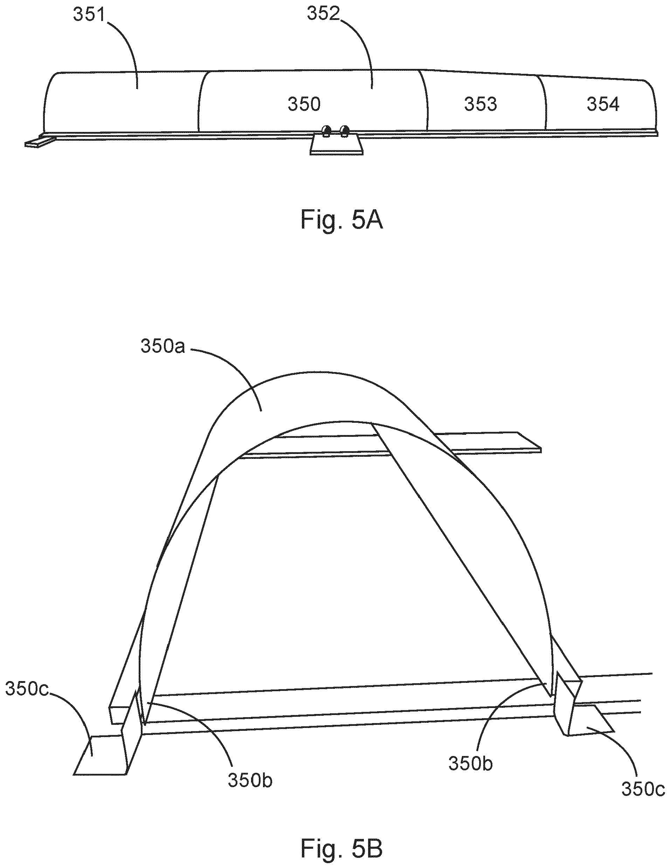

Fig. 5A zeigt eine schematische Darstellung eines Strömungswiderstandes in einer Seitenansicht und Fig. 5B zeigt eine schematische Darstellung einer Stirnseite eines Strömungswiderstandes. Der Strömungswiderstand 300 wird aus einer Mehrzahl von gebogenen faserverstärkten Kunststoffplatten 351 - 354 hergestellt. Hierbei können verschiedene Abschnitte, welche jeweils aus einer gebogenen faserverstärkten Kunststoffplatte bestehen, zusammengesetzt werden, um einen Tunnel 350 auszugestalten. Insbesondere kann ein Ende des Tunnels 350 kleiner ausgestaltet sein als das gegenüberliegende Ende. Die Wandung 350a des Tunnels wird aus einem faserverstärkten Kunststoff wie beispielsweise GFK Platten hergestellt. Die Enden 350b der GFK Platten können z. B. über Winkel 350c fixiert werden, um die Biegung der GFK Platten 351 - 354 zu erhalten. Optional können die Abschnitte auch eine Kegelform aufweisen, so dass die Größe der Bögen variiert werden kann.

Dies ist insbesondere vorteilhaft, weil damit eine Strömung laminar entlang der Außenseite des Tunnels 350 vorgesehen sein kann. Dies ist insbesondere vorteilhaft, weil damit keine Stufen in der Wandung des Tunnels vorhanden sind, was sich negativ auf die laminare Strömung auswirken kann.

Der Tunnel 350 kann nach Fertigung zumindest teilweise mit einem Vollmaterial 360 versehen werden, um den Tunnel 350 zu verschließen. Beispielsweise kann ein expandierendes Vollmaterial wie beispielsweise ein Schaum innerhalb des Tunnels vorgesehen sein, um den Strömungswiderstand zu realisieren. Die Strömung der Rotorblattheizung trifft auf den Strömungswiderstand. Die Strömung muss um den Strömungswiderstand herum fließen. Hierbei kommt es zu einer Verringerung des freien Volumens bzw. der freien Querschnittsfläche, so dass sich die Strömungsgeschwindigkeit erhöht. Dies ist wiederum vorteilhaft, weil damit eine verbesserte Übertragung der Wärme der Luft auf die Oberfläche des Rotorblattes erfolgt.

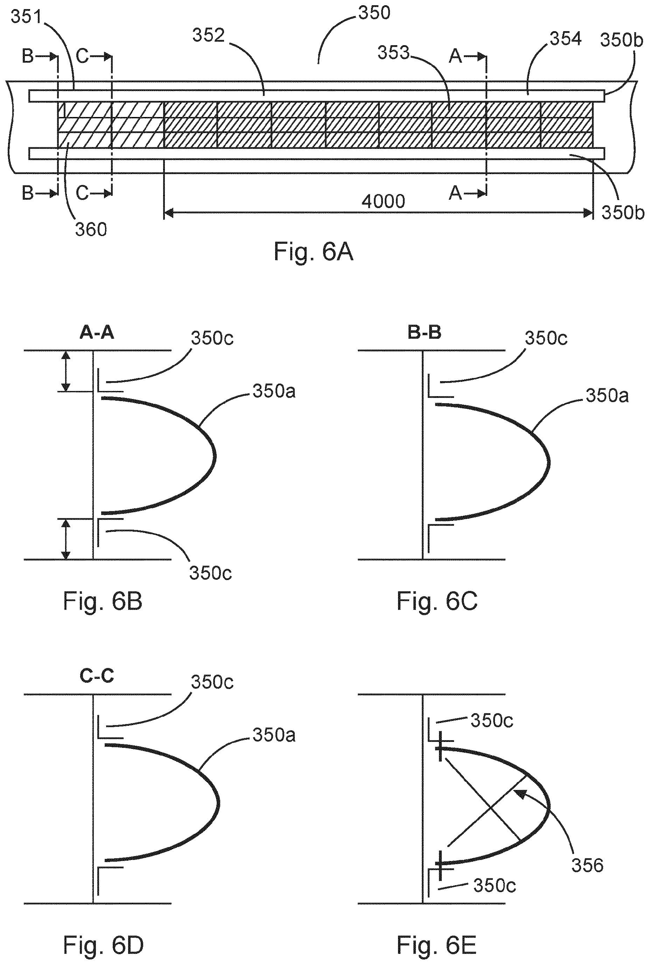

Fig. 6A bis 6E zeigen verschiedene Ansichten eines Strömungswiderstandes. In Fig. 6A ist eine Ansicht von unten dargestellt. In Fig. 6B ist ein Querschnitt A - A dargestellt. In Fig. 6C ist ein Querschnitt entlang B - B dargestellt. In Fig. 6D ist ein Querschnitt C - C dargestellt. Während in Fig. 6B z. B. das Bogenmaß 1400 beträgt, beträgt z. B. das Bogenmaß 1300 in Fig. 6C und z. B. 1200 in Fig. 6D. Die Enden 350b der gebogenen faserverstärkten Kunststoffplatten 350a können mit Winkeln 350c gehalten werden. Optional können Seile 356 verspannt werden, um den gebogenen Platten eine höhere Stabilität zu ermöglichen. Nach Fertigstellung der gebogenen Platten 351 - 354 und nach deren Zusammenfügung zu einem Tunnel 350 kann innerhalb des Tunnels ein Material 360 zum Auskleiden oder Verschließen des Tunnels vorgesehen sein.

Gemäß einem Aspekt der vorliegenden Erfindung können die Querschnittsverengungen z. B. bei Kanalquerschnitten mit einer Fläche von 30.000 mm² bis 100.000 mm² verwendet werden.

### Bezugszeichenliste

- 100: Windenergieanlage
- 102: Turm
- 104: Gondel
- 106: Rotor
- 110: Spinner
- 200: Rotorblätter
- 203: Innenvolumen
- 210: Blattschalen
- 220: Blattschalen
- 230: Rotorblattvorderkante
- 231: Stege
- 232: Stege
- 240: Rotorblatthinterkante
- 250: Kanäle
- 260: Kanäle
- 270: Kanäle
- 300: Strömungswiderstand
- 310: Strömungswiderstandsabschnitt
- 320: Strömungswiderstandsabschnitt
- 330: Strömungswiderstandsabschnitt
- 350: Tunnel
- 351 - 356: Faserplatten
- 360: Vollmaterial
- 500: Rotorblattheizung

## Patentansprüche

1. Windenergieanlagen-Rotorblatt (200), mit
einer Rotorblattschale (210, 220), welche ein Innenvolumen (203) umgibt,
einem Rotorblattheizsystem (500) in oder an einer Rotorblattwurzel (201) des Windenergieanlagen-Rotorblattes (200), wobei das Rotorblattheizsystem (500) erwärmte Luft erzeugt und in das Innenvolumen (203) des Rotorblattes (200) befördert, und
mindestens einem Strömungswiderstand (300) mit mindestens einem Strömungswiderstandsabschnitt (300, 310, 320, 330), welcher dazu ausgestaltet ist, einen freien Querschnitt des Innenvolumens (203), durch welchen die erwärmte Luft fließt, zu verengen,
wobei der Strömungswiderstand (300) eine Mehrzahl von gebogenen kunststoffverstärkten Faserplatten (351 - 356) aufweist, welche zusammen einen Tunnel (350) ausbilden,
wobei der Tunnel (350) zumindest teilweise durch ein Material (360) verschlossen ist.

2. Windenergieanlagen-Rotorblatt (200) nach Anspruch 1, wobei
freie Enden (350b) der Faserplatte (351 - 356) des Tunnels (350) mittels Winkeln (350c) gehalten sind.

3. Windenergieanlagen-Rotorblatt (200) nach Anspruch 1 oder 2, mit
mindestens einem Steg (231, 232) entlang einer Längsrichtung (L) des Rotorblattes (200),
wobei der mindestens eine Strömungswiderstandsabschnitt (300, 310, 320, 330) an dem mindestens einen Steg (231, 232) angeordnet ist.

4. Windenergieanlagen-Rotorblatt (200) nach Anspruch 1, 2 oder 3, mit
mindestens einem ersten und zweiten Steg (231, 232) entlang einer Längsachse (L) des Rotorblattes (200),
einem ersten Luftkanal (250) zwischen einer Vorderkante (230) des Rotorblattes (200) und einem ersten Steg (231), wobei mindestens ein erster Strömungswiderstandsabschnitt (310) in dem ersten Luftkanal (250) vorgesehen ist.

5. Windenergieanlagen-Rotorblatt (200) nach einem der Ansprüche 1 bis 4, mit
einem zweiten Luftkanal (260) zwischen einem Steg (231, 232) und einer Rotorblatthinterkante (240), wobei mindestens ein zweiter Strömungswiderstandsabschnitt (310) zumindest teilweise in dem zweiten Luftkanal (260) entlang der Längsrichtung (L) des Rotorblattes (200) vorgesehen ist.

6. Windenergieanlage (100) mit mindestens einem Windenergieanlagen-Rotorblatt (200) nach einem der Ansprüche 1 bis 5.
